# EUROPEAN PATENT APPLICATION

(11) **EP 2 237 197 A1**
(43) Date of publication of application: **06.10.2010**
(21) Application number: 09156966.5
(22) Date of filing: 31.03.2009
(51) Int. Cl.: G06Q 10/00

(54) **Method for evaluating key production indicators (KPI) in a manufacturing execution system (MES)**

(71) Applicant: Siemens Aktiengesellschaft, 80333 München (DE)
(72) Inventor: Solimano, Marco, 16126, Genova (IT); Dighero, Stefano, 16146, Genova (IT)
(74) Representative: Fischer, Michael

(57) **Abstract**

The present invention discloses a method for evaluating key production indicators (KPI) in a manufacturing execution system (MES), comprising the steps of:
-executing an object oriented tool (PM) for modeling a production process in the manufacturing execution system (MES), the modeling including a definition of plant floor equipments involved in the production process and corresponding MES applications managing the plant floor equipments;
-executing a plant performance analyzer (PPA) tool for calculating the key production indicators (KPI) on the plant floor equipments; and
-reading the key production indicators (KPI) calculated by the plant performance analyzer (PPA) tool in the object oriented tool (PM). The step of modeling the production process comprises the definition of a class (KPI.class) associated to the key production indicators (KPI) and including the calculus to be executed by the plant performance analyzer (PPA) on the plant floor equipments.

## Description

The present invention relates to a method for evaluating key production indicators in a manufacturing execution system including the steps of:
- executing an object oriented tool for modeling a production process in said manufacturing execution system, the modeling including a definition of plant floor equipments involved in the production process and corresponding MES applications managing the plant floor equipments;
- executing a plant performance analyzer tool for calculating the key production indicators on said plant floor equipments; and
- reading the key production indicators calculated by the plant performance analyzer tool in the object oriented tool. More particularly, the invention relates to a method of the type described above wherein the object oriented tool is a high level tool executed by a first processor or execution engine and the plant performance analyzer tool is a low level tool for plant floor equipments which is executed by a second processor or execution engines.

As it is well known, a method for evaluating key production indicators in a manufacturing execution system comprises executing a plant performance analyzer tool which calculates performance of plant floor equipments, for example measuring the throughput of each equipment, i.e. a number of pieces produced per time interval or a time required for the completion of a piece, measuring their functioning parameters, i.e. pressure, temperature, positioning, motion control, closed-loop control, cam control and so on.

In the manufacturing execution system, the production process is modeled through an object oriented tool which defines plant floor equipments involved in the production process and the corresponding MES applications for their management, i.e. the procedure to be executed by each plant floor equipment, their scheduling and coordination, the resources and material required and so on.

More particularly, the object oriented tool is a high level application, preferably including a graphical representation of plant floor equipments, and provides all the features to easily model the production process and the corresponding MES applications, as well as to modify such model when the performance must be improved.
In other words, the key performance indicators are calculated in the plant performance analyzer tool but it is important to evaluate them inside the object oriented tool because the modification of the production process model to improve performance, i.e. the definition of the plant floor equipments and the corresponding MES application, is executed in the object oriented tool.

The plant performance analyzer tool and the object oriented tool are executed by different and independent execution engines or processors because the former is a low level tool specifically programmed on the hardware and software of each plant performance equipment to be measured while the second is a high level tool independent from the plant floor equipments and supporting the entire production process.

A first disadvantage of these methods is that the key performance indicators are not communicated in real time, i.e. as soon as calculated, from the plant performance analyzer tool to the object oriented tool because the respective execution engines or processors are independently executed.

On the contrary, the object oriented tools is scheduled at predetermined intervals or events to retrieve key production indicators from the low level plant performance analyzer and only after recovery, the key production indicators are evaluated and the production process is eventually modified to improve performance. For example, the object oriented tool generates events based on time or on MES applications, which may are linked to a calculus in the plant performance analyzer tool. However, such association is made manually, i.e. by a user, when the production process is modeled and it is not automatically supported by the object oriented tool.

Accordingly, it is not possible to quickly evaluate the performance of the plant floor equipments in the object oriented tool and, if necessary, to modify the production processes in order for enhancing their performance and the performance of the overall production process.

Another disadvantage is that the key production indicators, i.e. the measures and calculi to be processed on each plant floor equipment, are not definable or modifiable in the object oriented tool, because this tool is not programmed to work at low level, i.e. at plant floor. So, not only the calculus but also the definition and modification of key production indicators are executed in the plant performance analyzer tool. More particularly, the plant performance analyzer tool is based on a flat view model of tags or achieving system namespace not providing features to easily modify the key production indicators.

A further disadvantage is that the definition of the key production indicators often requires not only data inherently associated to the plant floor equipments but also data available only at high level, i.e. in the MES applications or in the object orient tool itself, for example a production order, i.e. a number of pieces to be produced within a time limit or the material available to produce pieces. So, the definition and modification of key production indicators inside the plant performance analyzer tool is complex and time-consuming because some data must be retrieved from the object oriented tool, substantially when the production process actually start, and are not inherently associated to the plant floor equipments.

The problem at the base of the present invention is to provide a method for evaluating key production indicators in a production process wherein the calculus executed by the plant performance analyzer tool on the plant floor equipments is reported in real time to the object oriented tool and wherein such object oriented tool may define and modify the key production indicators, the method substantially integrating the plant performance analyzer tool and the object oriented tool and overcoming the limitations that currently affect the know method for collecting key production indicators.

The solution idea on which the present invention is based is that of defining a new class in an object oriented tool of a manufacturing execution system, the new class defining the key production indicators to be calculated in a plant performance analyzer tool, wherein the definition of key production indicators comprises specifying high level data, required for the execution of the calculus and available in the object oriented tool or in MES applications, and alias or empty attributes which are specified in the plant performance analyzer tool, because inherently associated to the hardware and software of each plant floor equipments.

Advantageously, the new class supports the definition and the modification of key production indicators at high level and a real time evaluation of the performance of each plant floor equipment, as well the performance of the entire production process, inside the high level object oriented tool.

The definition of the new class includes attributes associated to data available in the object oriented tool and/or data available in MES applications. Advantageously, the definition and modification of the new class associated to the key production indicators is simpler and less time-consuming because data which must be retrieved when the production process actually start and data not inherently associated to the plant floor equipments are directly available in the object oriented tool, wherein the new class itself and the key production indicators are defined.

The definition of the new class further includes empty or alias attributes associated to data available in the plant performance analyzer tool, such alias attributes being associated to a corresponding value only when the new class is instantiated in a corresponding object and plant floor equipments whereon the plant performance analyzer tool executes the calculus. Advantageously, the new class provides an integration between the plant performance analyzer tool and the object oriented tool because also data not available in the object oriented tool are therein defined as alias attributes.

According to the method of the invention, the new class is instantiated in an object and is associates to a predetermined plant floor equipment. More particularly, during instantiation, the attributes of the object are instantiated with value available in the oriented tool and/or data of the MES applications while the alias attributes are instantiated in a substantially empty value, which is subsequently modified by the plant performance analyzer tool.

Further advantages of the method according to the present invention will be apparent from the following description given by way of preferred examples and without limiting the scope of protection of the invention.

### Brief description of the drawings

Figure 1 schematically represents, in a diagram block, a method of evaluating key performance indicators, according to the present invention.
Figure 2 schematically represents, in a diagram block, the method of figure 1, for evaluating key performance indicators associated to an estimated waste quantity of a product.
Figure 3 schematically represents a step for defining a new class associated to key production indicators, according to the method of the present invention.
Figure 4 schematically represents a relation between two different classes associated to key production indicators, defined according to the method of the present invention.
Figure 5 schematically represents a step for instantiating two different objects from the classes of figure 4.
Figure 6 schematically represents a step for instantiating a value of alias attributes of the objects of figure 5.
Figure 7 schematically represents a step of calculating and evaluating the key performance indicators according to one of the objects of figure 5.

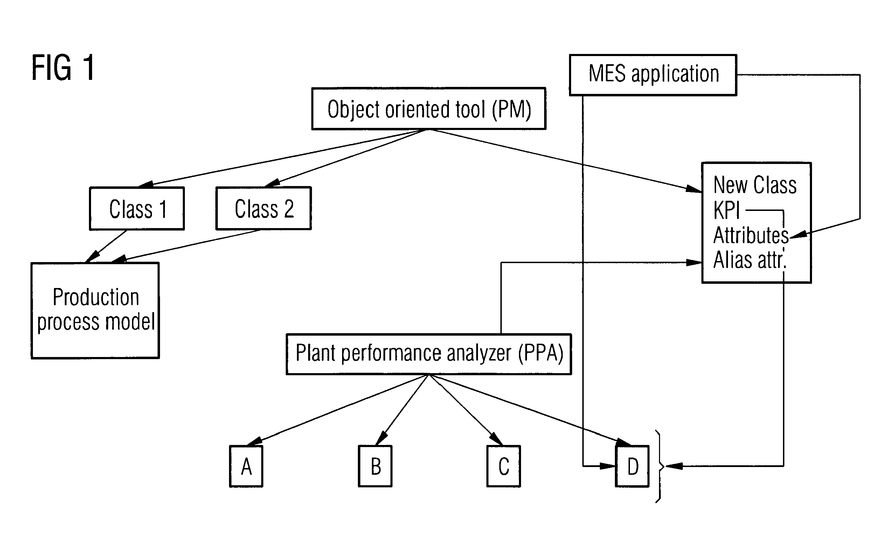

With reference to figure 1, it is schematically represented a method for evaluating key production indicators KPI in a manufacturing execution system MES wherein a plant performance analyzer PPA tool, executed by a first execution engine or processor, calculates performance of plant floor equipments A, B, C, D, for example measuring the throughput of each equipment A, B, C, D, i.e. a number of pieces produced per time interval or a time required for the completion of a piece, measuring their functioning parameters, i.e. pressure, temperature, positioning, motion control, closed-loop control, cam control and so on.

In the manufacturing execution system MES, the production process is modeled through an object oriented tool PM which defines the plant floor equipments A, B, C, D involved in the production process and the corresponding MES applications for their management, i.e. the procedure to be executed by each plant floor equipment A, B, C, D, their scheduling and coordination, the resources and material required and so on.

The object oriented tool PM is executed by a second execution engine or processor, and comprises a plurality of class, preferably represented through a graphical interface providing all the features to easily model the production process and the corresponding MES applications, as well as to modify such model, especially to improve performance.

More particularly, in order to evaluate the performance of the production process, the plant performance analyzer PPA tool calculates key production indicators KPI on the plant floor equipments and the object oriented tool PM reads the key production indicators KPI and evaluated them in order to detect a possible improvement in the production process.

According to the present invention, the step of modeling the production process inside the object oriented tool comprises a definition of a new class KPI.class associated to the key production indicators KPI and including a calculus to be executed by the plant performance analyzer PPA on the plant floor equipments.

More particularly, the definition of the new class KPI.class includes attributes associated to data available in the object oriented tool PM and/or MES applications, and empty or alias attributes associated to data available only in the plant performance analyzer PPA tool.

According to the invention, the new class KPI.class is instantiated in an object KPI.obj of the object oriented tool PM which is associated to a predetermined plant floor equipment. More particularly, during instantiation, the attributes of the object KPI.obj are instantiated with value available in the oriented tool and/or data of the MES applications while the alias attributes are instantiated in a substantially empty value, which may be subsequently modified by the plant performance analyzer tool, i.e. when the actual value is available.

Advantageously, the definition of the new class in the object oriented tool PM provides that the key performance indicators KPI are available in the object oriented tool PM in real time, i.e. as soon as the plant performance analyzer PPA tool has calculated them, even if different execution engines or processors respectively execute the plant performance analyzer PPA tool and the object oriented tool PM.

According to the method of the present invention, the calculus is executed in the plant performance analyzer PPA tool but the definition and modification of key production indicators KPI, i.e. the definition of the calculus to be executed, the definition of attributes available at high level and the definition of alias attributes available at plant performance analyzer, is executed in the object oriented tool PM.

The following description of an embodiment of the present invention is based on a suite of components for MES applications developed by the applicant and also indicated as SIMATIC IT. According to this suite, the graphical Object Oriented tool for modeling plant floor equipments and MES applications is also indicated as Production Modeler or PM and the component for collecting, processing and archiving data is also referred as Plant Performance Analyzer tool or PPA.

More particularly, in PM it is possible to define a model for plant floor equipment by means classes and corresponding Plant objects storing information. PM allows engineers not only to model their plant floor equipments but also to synchronize and coordinate execution of different components of the suite, in order to manage manufacturing operations in the production process.

According to the method of the present invention, a new class in PM defines a new type of data associated to calculation of key performance indicators, hereafter indicated as KPI.

The plant floor equipments modeled in PM are associated to:
-a) attributes which may be read and written directly by PM. These attributes comprise values and correspond to data known only by an operation management execution environment, e.g a tank maximum capacity, a production line maximum speed based on current product type, a desired target or validity range based on order specifications;
-b) real time attributes, linked to real time tags stored in real time database system (RTDS). These attributes may be read and written by PM and by any other SIMATIC IT component and they comprise both values and addresses of the actual real time tag to be linked;
-c) alias attributes, which only specify a tag in an historical archive, without any need to read or write it.

The alias attributes comprise only the tag address and they are used to uniquely identifying a tag in RTDS, link it to a plant floor equipment and send this information to PPA. More particularly, alias attributes do not have any value for PM and they are not read or written in PM.

According to an aspect of the present invention, the new class in PM and their respective instantiated objects represent an association with:
-1) a calculus executed by PPA, with an execution engine or processor which is different from the execution engine or processor of PM and which comprise or expose an interface for activating the calculus. The calculus may also be executed by another execution engine or processor, different form the execution engine or processor of PPA and PM, provided with a corresponding interface for the activation of the calculus;
-2) a set of context information, i.e. data which are available at high level, for example available in PM, in a MES application or in another component of the suite;
-3) plant floor equipments.

According to another aspect of the present invention, "standard KPI classes" in PM are defined for pre-defined calculi and "custom KPI classes", derived from the "standard KPI classes", are defined for "custom calculi". The instantiation of the new class associated to KPI in a corresponding object is executed in library or in plant floor. When the instantiation is executed in library the KPI is assigned to an equipment class while, when the instantiation is executed in plant floor, the KPI is directly assigned to a plant floor equipment. Custom KPI classes have a set of custom inputs (the output should always be unique), represented as input arguments of the scheduling method of that KPI.

The input data for executing the calculus in PPA may derive from PM, for example as scheduling method input arguments, or may be available inside the execution engine of PPA, i.e. they are directly obtained by the PPA calculus scheduler, in order to reduce data marshalling. As already stated above, even if such data are not available in PM, they are modeled therein as alias attributes.

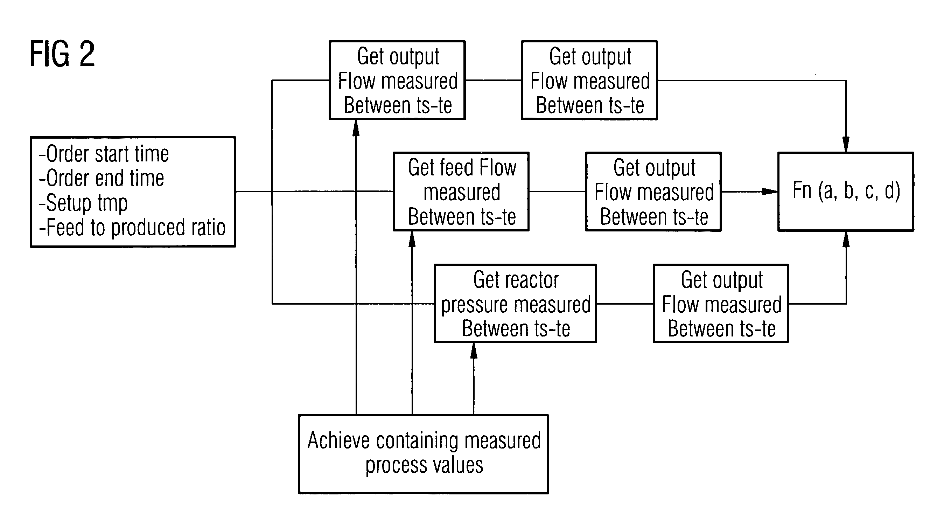

With reference to figure 2 is schematically represented in a diagram block an example for evaluating a key performance indicator KPI associated to a waste quantity produced by a plant floor equipment during a production order to produce a predetermined product, initiated at a first predetermined time or order start time, and terminated at a second predetermined time or order end time.

The order start time and the order end time are attributed available in the object oriented tool PM, because they are set at high level, together with other attributes, for example a "setup tmp" attribute, which is set-up temperature for a reaction processing step and a "Feed to produced ratio" attribute, which is dependent on the combination between the actual plant floor equipments allocated for the production order and a product rule associated to the plant floor equipments to produce the product.

The above attributes are available in the object oriented tool PM and may be not only therein defined, inside the new class for key production indicators KPI but also instantiates with values for the corresponding attributes. The calculation of the key production indicators KPI is defined in the class itself, substantially as a function Fn which depends on parameters a, b, c, d.

With reference to the example given above:
- the parameters a is the actual quantity of material produced using the output flow measure collected and achieved between the order start time and the order end time;
- the parameter b is the material input feed quantity of the order calculated using the material input feed flow measure collected and achieved between the order start time and the order end time;
- the parameter c is the correction factor calculated using the reaction setup temperature which is supplied as input parameter and a reactor average pressure obtained by the measured pressure value which is collected and achieved between the order start time and the order end time;
- the parameter d is a feed-to-produced ratio which is supplied as input parameter.

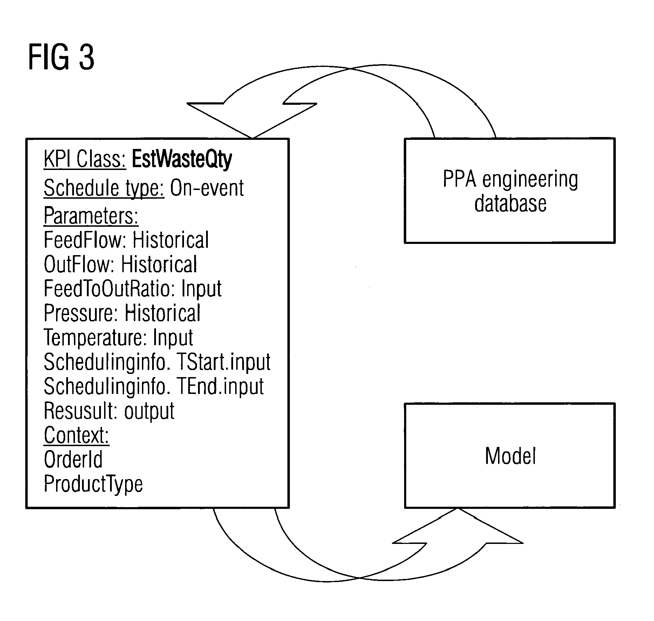

According to the method of the present invention, the new class in PM defines the calculus to be executed in PPA, the attributes associated to PM and the alias attributes associated to PPA while the values of such alias attributes are instantiated by PPA, wherein such values are known. With reference to the above example, a calculation function EstWasteQty(FeedFlow, OutFlow, FeedToOutRatio, Pressure, Temperature) is created wherein the attributes FeedFlow, OutFlow, FeedToOutRatio, Pressure, Temperature are defined as herebelow reported.
- FeedFlow, OutFlow, Pressure: these attributes are configured as input parameter of a type "Historical", i.e. they represent historical time-series of values to be retrieved by the execution engine of PPA from a process values historical archive;
- FeedToOutRatio and Temperature: these attributes are context data, i.e. they are supplied from PM.
The step of defining the new class associated to KPI inside PM is schematically represented with reference to figure 3 wherein a PPA engineering database including calculation functions library already defined in PPA is accessed or browsed by PM to create the new class.

When the new class has been defined in PM, the context data may be specified, for example Orderld and ProductType, i.e. data associated to the production order and available in PM. The new class comprises the reference to the calculation function and to its input/output attributes. Moreover, some attributes as Schedulinglnfo are available to scheduling purpose or to store a Result of the calculus.

More particularly, in the example given above, two scheduling parameters are available, TStart and TEnd, providing the context data associated to the time and to be considered for the calculus.

An attribute Schedule Type is also defined, for specifying a mode of scheduling the calculus:
- On-event mode, if the calculus is executed on a specific event, issued by means of a calculation method provided by the new class;
- Periodic mode, if the calculus is executed periodically, according to an activation event and other criteria supplied by means of a calculation method provided by the new class.

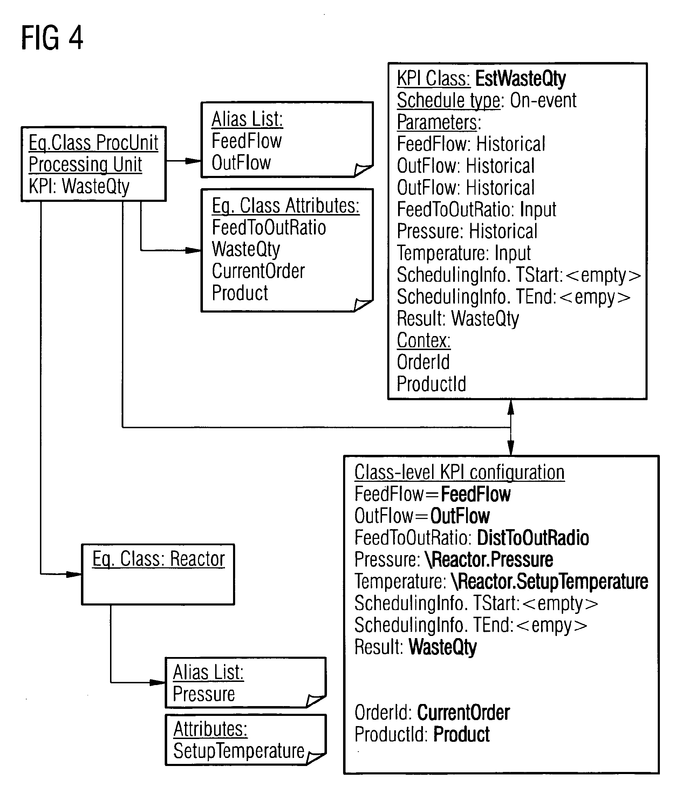

With reference to figure 4, it is schematically represented a new class ProcUnit in PM comprising a definition of the calculus, WasteQty. The ProcUnit class of figure 4 comprises some attributes directly associated to the class and some attributes which are associated to another class, previously defined in PM, i.e. a Reactor class. More particularly, the attributes "Pressure" and "Temperature" of ProcUnit class are associated to attributes of the class "Reactor".

According to the invention, it is possible to create one O more instances of the classes ProcUnit and Reactor. More particularly the instantiated classes, i.e. the corresponding objects, are associated to the calculus defined in the PM but may furnish different values to the alias attributes therein defined, depending on the hardware of the plant floor equipments associated to the objects.

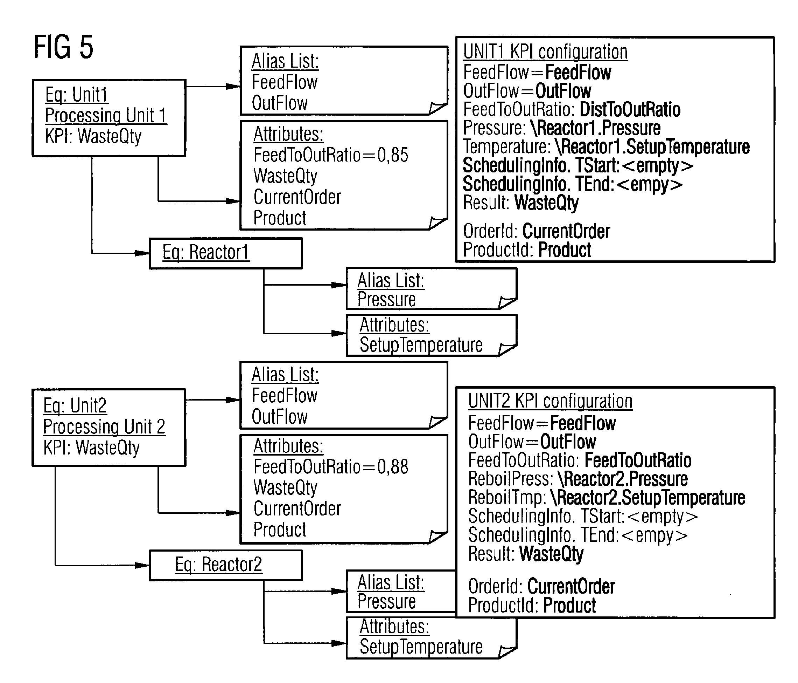

For example, with reference to figure 5, two objects are instantiated form the new class ProcUnit, i.e. Unit1 and Unit2; the object Unit 1 is associated to an object Reactor1 instantiated from the class reactor and the object Unit 2 is associated to an object Reactor2 instantiated from the same class reactor.

At instance level, the "relative" references used in the pre-configured parameters mapping will be automatically translated into instance-relative mappings. Once the model of the production process in PM is created, the values for the alias attributes are set. More particularly, the mapping to the actual process tags, which are the source of the corresponding measured values are defined. Moreover, other plant floor equipment-specific settings are related to "static" attributes, i.e. attributes not dynamically retrieved from measured values but statically set only one time during the modeling the production process.

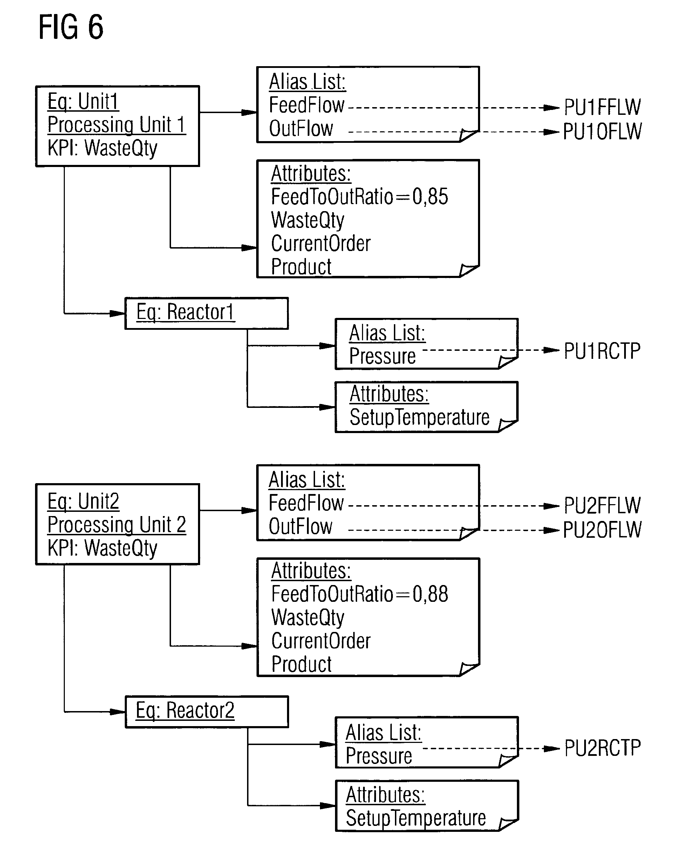

With reference to figure 6, the FeedFlow, Outflow and Pressure alias attributes, are instantiated respectively for both the objects Unit1, Unit2 and Reactor1, Reactor2. During the production process execution, PM activates the production order and, at order completion, an event triggers a rule that retrieves the necessary input parameters for executing the calculation of KPI and schedules the calculus by supplying the input parameters.

The supplied attributes depend on the context data, for example on the plant floor equipments where that specific order has been produced.

When the calculation of KPI is executed, the following steps are automatically executed:
- alias names are used according to the new class definition and are automatically mapped to the right process tag;
- attributes are used according to new class configuration;
- order start time and end time attributes are set explicitly in the rules using the information retrieved in specific rule's step
- context data is set using current value attributes, according to the new class configuration.
The value calculated is written back to the attributes, thus allowing to use the updated value in real time.

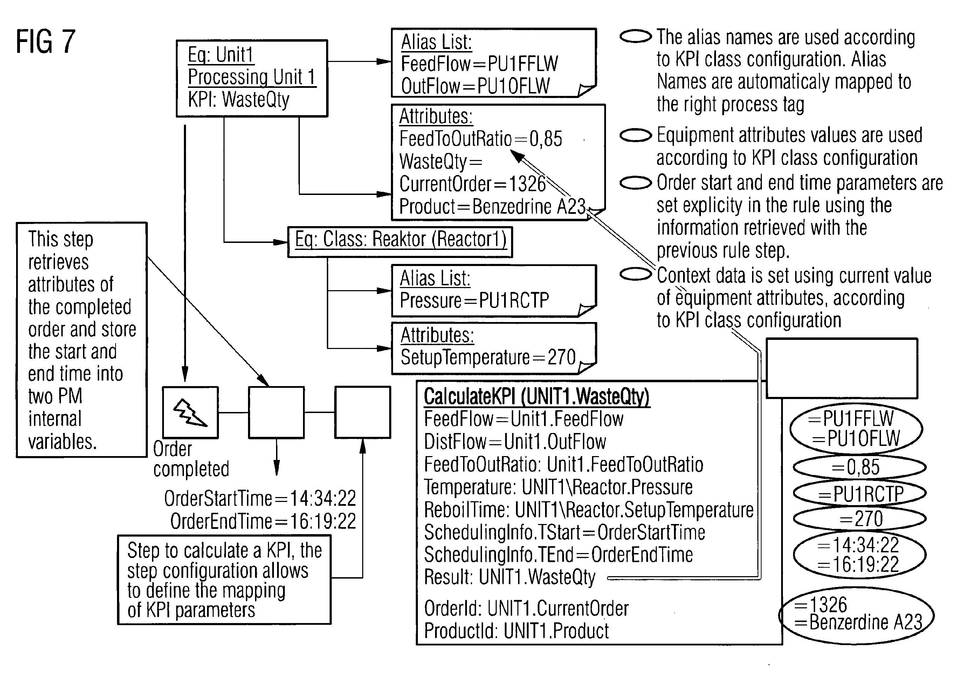

Figure 7 schematically represents the final execution of the calculus. The above example demonstrates that the definition of calculi and the coordination of their execution with manufacturing operations is simplified through the use of an object oriented tool. In particular, the object oriented tool allows modeling the association between attributes and input/output parameters inside a class. This association is inherited by instance, i.e. objects derived there from, thus simplifying the engineering of the application. During execution of manufacturing operations, the right calculus is scheduled and the right information, i.e. context data, input parameter, is provided depending on the specific plant floor equipment associated to the instantiated object.

The aliases attributes, with relative reference, allows a pre-configuration of the association between attributes and input parameters, and the real data which always depend on the instantiated object, i.e from the plant floor equipment. Advantageously, the method de-couples the model and the coordination of calculus.

Advantageously, de-coupling allows to easily modify the calculus to be executed without any impact on the underlying configuration of physical tags, i e. the configuration that defines the physical connection with the process data.

Advantageously, the method of the present invention defines a new class supporting the definition and the modification of key production indicators at high level and a real time evaluation of the performance of each plant floor equipment, as well the performance of the entire production process, inside the high level object oriented tool.

Advantageously, the definition of the new class includes attributes associated to data available in the object oriented tool and/or data available in MES applications and the definition and modification of the new class associated to the key production indicators is simpler and less time-consuming because data which must be retrieved when the production process actually start and data not inherently associated to the plant floor equipments are directly available in the object oriented tool, wherein the new class itself and the key production indicators are defined.

Advantageously, the definition of empty or alias attributes associated to data available in the plant performance analyzer tool, such alias attributes being associated to a corresponding value only when the new class is instantiated in a corresponding object and plant floor equipments whereon the plant performance analyzer tool executes the calculus.

Advantageously, the new class provides an integration between the plant performance analyzer tool and the object oriented tool because also data not available in the object oriented tool are therein defined as alias attributes.

## Claims

1. Method for evaluating key production indicators (KPI) in a manufacturing execution system (MES), comprising the steps of:
- executing an object oriented tool (PM) for modeling a production process in said manufacturing execution system (MES), said modeling including a definition of plant floor equipments involved in the production process and corresponding MES applications managing the plant floor equipments;
- executing a plant performance analyzer (PPA) tool for calculating the key production indicators (KPI) on said plant floor equipments; and
- reading the key production indicators (KPI) calculated by said plant performance analyzer (PPA) tool in said object oriented tool (PM),
**characterized by** the fact that said step of modeling comprises a definition of a class (KPI.class) associated to said key production indicators (KPI) and including a calculus to be executed by said plant performance analyzer (PPA) on said plant floor equipments.

2. Method according to claim 2, wherein the definition of said class (KPI.class) includes attributes associated to data available in said object oriented tool (PM) and/or MES applications.

3. Method according to claim 2 wherein the definition of said class (KPI.class) includes alias attributes associated to data available in said plant performance analyzer (PPA) tool.

4. Method according to anyone of the previous claims
**characterized by** comprising the step of instantiating said class (KPI.class) in an object (KPI.obj) of said object oriented tool (PM), said step of instantiating comprising associating said object (KPI.obj) to a predetermined plant floor equipment.

5. Method according to claim 4 wherein said object oriented tool (PM) and/or said MES application provides one or more values to corresponding attributes of the object (KPI.obj) instantiated from said class (KPI.class).

6. Method according to claim 4 wherein said plant performance analyzer (PPA) provides one or more values to corresponding alias attributes of the object (KPI.obj) instantiated form said class (KPI.class).

7. Method according to anyone of the previous claims, wherein said class (KPI.class) comprises one or more class functions defining operation which may be triggered on said plant performance analyzer (PPA).

8. Method according to anyone of the previous claims wherein said class (KPI.class) comprises one or more class events defining when and which data are returned from said plant performance analyzer (PPA) to said object oriented tool (PM).

9. Method according to anyone of the previous claims, wherein said class (KPI.class) comprises class limits/targets defining values to be compared with values previously calculated from said plant performance analyzer (PPA).

10. Method according to claim 4 wherein said class (KPI.class) comprises class relations defining parent-child relations between a first objects (parent) instantiated from said class (KPI.class) and associated to a first calculus, and a second objects (child) instantiated from a second class and associated to a second different calculus which to be used in said first calculus.
